# EUROPÄISCHE PATENTSCHRIFT

(11) **EP 2 927 372 B1**
(45) Veröffentlichungstag und Bekanntmachung des Hinweises auf die Patenterteilung: **04.01.2017**
(21) Anmeldenummer: 15160925.2
(22) Anmeldetag: 25.03.2015
(51) Int. Cl.: E01C 19/48, E01C 23/088, E01C 23/07, B62D 55/116

(54) **SELBSTFAHRENDE BAUMASCHINE UND VERFAHREN ZUM STEUERN EINER SELBSTFAHRENDEN BAUMASCHINE**
SELF-PROPELLED CONSTRUCTION MACHINE AND METHOD FOR CONTROLLING THE SAME
ENGIN AUTOMOBILE ET PROCÉDÉ DE COMMANDE D'UN ENGIN AUTOMOBILE

(30) Priorität: 04.04.2014 DE 102014005077
(43) Veröffentlichungstag der Anmeldung: 07.10.2015
(73) Patentinhaber: Wirtgen GmbH, 53578 Windhagen (DE)
(72) Erfinder: Fritz, Matthias, 53545 Linz (Rhein) (DE); Busenbender, Achim, 53604 Bad Honnef (DE); Barimani, Dr. Cyrus, 53639 Königswinter (DE); Hähn, Dr. Günter, 53639 Königswinter (DE)
(74) Vertreter: Oppermann, Frank

(56) Entgegenhaltungen:
- EP-B1- 2 104 768

## Beschreibung

Die Erfindung betrifft eine selbstfahrende Baumaschine, insbesondere einen Gleitschalungsfertiger oder eine Straßenfräsmaschine. Darüber hinaus betrifft die Erfindung ein Verfahren zum Steuern einer selbstfahrenden Baumaschine, insbesondere zum Steuern eines Gleitschalungsfertigers oder einer Straßenfräsmaschine.

Die bekannten Gleitschalungsfertiger sind zur kontinuierlichen Herstellung von Baukörpern aus einem fließfähigem Material bekannt. Sie verfügen über eine Vorrichtung, in der das fließfähige Material in die gewünschte Form gebracht wird. Eine derartige Vorrichtung zum Formen des fließfähigen Materials wird auch als Betonmulde bezeichnet. Mit Gleitschalungsfertigern können auf dem Gelände (Boden) beispielsweise Leitwände aus Beton hergestellt werden. Die bekannten Straßenfräsmaschinen weisen eine Fräswalze auf, mit der vom Boden Material abgefräst wird.

Die bekannten Gleitschalungsfertiger und Straßenfräsmaschinen verfügen über ein Fahrwerk, das mindestens ein in Arbeitsrichtung vorderes und hinteres Laufwerk aufweist, und einen Maschinenrahmen, an dem die Vorrichtung zum Formen von fließfähigem Material bzw. die Fräswalze vorgesehen ist. Der Maschinenrahmen wird von den Laufwerken zugeordneten Hubeinrichtungen getragen, so dass Maschinenrahmen und Laufwerke relativ zueinander bewegbar und somit Höhe und Ausrichtung des Maschinenrahmens in Bezug auf den Boden einstellbar sind. Die Betonmulde bzw. die Fräswalze sind an dem Maschinenrahmen befestigt, so dass Betonmulde und Fräswalze in Bezug auf den Boden in der Höhe verstellbar sind. Die Laufwerke können Kettenlaufwerke oder Räder sein.

Eine Gleitschalungsfertiger ist beispielsweise aus der WO 2011 026 504 A1 und eine Straßenfräsmaschine beispielsweise aus der EP 2 104 768 B1 bekannt.

Der Maschinenrahmen sollte während des Vorschubs der Baumaschine in Längsrichtung gesehen eine in Bezug auf die Bodenoberfläche parallele Ausrichtung haben. Die Ausrichtung in Querrichtung wird von dem jeweiligen Anwendungsfall bestimmt und ist vielfach auch parallel zur Bodenoberfläche. In diesem Zusammenhang wird unter der Bodenoberfläche eine idealisierte von Unebenheiten befreite plane Fläche verstanden, die in Längs- und/oder Querrichtung gegenüber der Horizontalen geneigt sein kann. In der Praxis wird die Oberfläche des Bodens aber Unebenheiten aufweisen, d. h. nicht eben sein.

Die aus der EP 2 104 768 B1 bekannte Baumaschine verfügt über eine Steuereinheit, mit der die den Laufwerken zugeordneten Hubeinrichtungen derart ein- bzw. ausgefahren werden, dass der Maschinenrahmen in einer parallelen Ausrichtung zur Bodenoberfläche verbleibt. Eine derartige Steuereinheit kann auch an einem Gleitschalungsfertiger vorgesehen sein.

Bei einem Gleitschalungsfertiger wird die an dem Maschinenrahmen befestigte Betonmulde während des Vorschubs der Baumaschine über den Boden geführt. An der Unterseite ist die Betonmulde offen und an den Seiten von Seitenplatten begrenzt. An der Oberseite ist die Betonmulde von einer Deckplatte begrenzt. Das fließfähige Material tritt an der Rückseite der Betonmulde aus. In der Betonmulde wird der Beton zwischen der Deckplatte und den Seitenplatten einerseits und dem Boden andererseits verdichtet, bevor er in der gewünschten Form an der Rückseite der Betonmulde austritt.

Während des Vorschubs des Gleitschalungsfertigers sollte sich die Deckplatte der Betonmulde in Bezug auf den Boden immer auf der gleichen Höhe befinden, so dass der Baukörper, beispielsweise die Leitwand, in Längsrichtung immer die gleiche Höhe hat. Zur Einstellung der Höhe der Betonmulde in Bezug auf den Boden werden die Hubeinrichtungen ein- bzw. ausgefahren, so dass die Betonmulde mit dem Maschinenrahmen angehoben oder abgesenkt wird.

Die Einstellung der Höhe des Maschinenrahmens erweist sich auf einem ebenen Gelände als relativ unproblematisch. Wenn das Gelände aber nicht eben ist muss die Höhe der Betonmulde während des Vorschubs der Baumaschine in Bezug auf die Bodenoberfläche korrigiert werden. Eine Höhenkorrektur ist auch deshalb erforderlich, weil die Laufwerke nicht in derselben Spur laufen, in der auch der Baukörper errichtet wird.
Im Stand der Technik sind hierzu verschiedene Lösungen bekannt. Eine häufig angewandte, einfache und kostengünstige Lösung liegt darin, die Bodenoberfläche mit geeigneten berührenden oder berührungslosen Sensoren abzutasten, um einen konstanten Abstand der Betonmulde zur Bodenoberfläche einzustellen. Nachteilig an dieser Lösung ist jedoch, dass etwaige Unebenheiten der Bodenoberfläche "kopiert" werden, da die Oberkante des Baukörpers immer einen konstanten Abstand zu der tatsächlichen Bodenoberfläche hat, so dass die Unebenheiten der Bodenoberfläche auf den Baukörper übertragen werden.

Zur Lösung dieses Problems finden im Stand der Technik Leitdrähte Verwendung, die in einer vorgegebenen Höhe und Ausrichtung über dem Boden gespannt werden und den gewünschten Verlauf des Baukörpers repräsentieren sollen. Zum Ausgleich der Unregelmäßigkeiten der Geländeoberfläche sollte dieser Baukörper in Längsrichtung unterschiedliche Höhen haben, d. h. bei einer Geländevertiefung eine größere Höhe und bei einer Geländeerhöhung eine geringere Höhe, so dass die Oberkante des Baukörpers in Längsrichtung immer auf der gleichen Höhe liegt.

Nachteilig ist, dass die Leitdrähte zuvor gespannt und eingemessen werden müssen, was zeitaufwändig und kostspielig ist. Zudem behindern die gespannten Leitdrähte den Baustellenablauf. Wenn auf einen Leitdraht verzichtet wird, können bei einem Gleitschalungsfertiger daher Unregelmäßigkeiten des Geländes, beispielsweise abschnittsweise auftretende Erhöhungen oder Vertiefungen, zu Schwankungen der Höhe des Baukörpers in Längsrichtung führen. Bei einer Straßenfräsmaschine stellt sich die gleiche Problematik, da die Höhe des Maschinenrahmens in Bezug auf die Geländeoberfläche die Frästiefe bestimmt.

Der Erfindung liegt die Aufgabe zugrunde, eine Baumaschine, insbesondere einen Gleitschalungsfertiger oder eine Straßenfräsmaschine zu schaffen, mit der auch bei Unregelmäßigkeiten des Profils der Geländeoberfläche ohne die Verwendung eines Leitdrahtes optimale Arbeitsergebnisse erzielt werden können. Darüber hinaus ist eine Aufgabe der Erfindung, ein Verfahren zum Steuern einer selbstfahrenden Baumaschine, insbesondere Gleitschalungsfertiger oder Straßenfräsmaschine, anzugeben, mit dem optimale Arbeitsergebnisse auch bei Unregelmäßigkeiten des Profils der Geländeoberfläche ohne die Verwendung eines Leitdrahtes erzielt werden.

Die Lösung dieser Aufgaben erfolgt erfindungsgemäß mit den Merkmalen der unabhängigen Ansprüche. Die Gegenstände der abhängigen Ansprüche betreffen vorteilhafte Ausführungsformen der Erfindung.

Die erfindungsgemäße Baumaschine verfügt über mindestens ein in Arbeitsrichtung vorderes und hinteres Laufwerk. Die Baumaschine hat vorzugsweise zwei vordere und zwei hintere Laufwerke. Sie kann aber auch über nur ein vorderes bzw. hinteres Laufwerk verfügen. Unter Laufwerken werden in diesem Zusammenhang sowohl Kettenlaufwerke als auch Laufwerke verstanden, die Räder aufweisen.

Die Steuer- oder Regeleinheit der erfindungsgemäßen Baumaschine ist derart konfiguriert, dass während des Vorschubs der Baumaschine die dem vorderen Laufwerk zugeordnete Hubeinrichtung derart aus- bzw. eingefahren wird oder die den vorderen Laufwerken zugeordneten Hubeinrichtungen derart aus- bzw. eingefahren werden, dass der Maschinenrahmen in Längsrichtung in einer vorgegebenen Ausrichtung zur Oberfläche des Bodens verbleibt. Eine derartige Steuerung setzt die erfindungsgemäße Baumaschine voraus. Dabei wird die Ausrichtung des Maschinenrahmens auf eine ideale von Unregelmäßigkeiten befreite Oberfläche bezogen, so dass lokale Vertiefungen oder Erhöhungen keine Berücksichtigung finden.

Unter einer Steuer- oder Regeleinheit wird hier jede Einheit verstanden, mit der die Hubeinrichtungen gesteuert und/oder geregelt werden können. Insofern wird hier nicht zwischen einer Steuerung und Regelung unterschieden. Die Steuer- oder Regeleinheit kann eine von der Maschinensteuerung unabhängige eigenständige Einheit sein, oder aber als Bestandteil der Maschinensteuerung ausgebildet sein.

Die Ausrichtung des Maschinenrahmens in Längsrichtung kann unabhängig von der Anwendung in einem großen Bereich frei gewählt werden, sollte aber vorzugsweise eine parallele Ausrichtung sein. Bei paralleler Ausrichtung des Maschinenrahmens in Bezug auf die Bodenoberfläche können die Maschinen optimal eingesetzt werden. So bildet beispielsweise die Betonmulde eines Gleitschalungsfertigers mit der Bodenoberfläche eine nach allen Seiten hin geschlossene und sich entgegengesetzt zur Fahrtrichtung verjüngende Form. Bei einer Straßenfräsmaschine wird unter anderem der Verladeprozess des Fräsgutes durch die parallele Ausrichtung des Maschinenrahmens optimiert.

Das Funktionsprinzip der erfindungsgemäßen Baumaschine beruht darauf, dass Unregelmäßigkeiten der Geländeoberfläche während des Vorschubs der Baumaschine dadurch erkannt werden können, dass die vordere Hubeinrichtung ein- bzw. ausgefahren wird oder die vorderen Hubeinrichtungen ein- bzw. ausgefahren werden, um den Maschinenrahmen während des Vorschubs der Baumaschine in einer vorgegebenen Ausrichtung zum Boden zu halten. Die Oberfläche des Geländes zeichnet sich also in der Regelung des vorderen Laufwerks oder der vorderen Laufwerke ab.

Während des Vorschubs der Baumaschine wird bei der erfindungsgemäßen Baumaschine in Abhängigkeit von der Regelung der vorderen Hubeinrichtung oder der vorderen Hubeinrichtungen, die zu einer parallelen Ausrichtung des Maschinenrahmens zu der idealen, von Unebenheiten freien Oberfläche des Geländes führt, mit einer zeitlichen Verzögerung ein Eingriff in die Regelung der hinteren Hubeinrichtung oder der hinteren Hubeinrichtungen vorgenommen. Dadurch wird die von der hinteren Hubeinrichtung oder den hinteren Hubeinrichtungen eingestellte Höhe der Vorrichtung zum Formen von fließfähigem Material oder der Fräswalze in Bezug auf den Boden wenigstens teilweise korrigiert, so dass Unregelmäßigkeiten der Geländeoberfläche zumindest teilweise kompensiert werden.

Die erfindungsgemäße Steuerung oder Regelung geht davon aus, dass Unregelmäßigkeiten der Geländeoberfläche zu einem Aus- bzw. Einfahren der vorderen Hubeinrichtung(en) führt. Abschnittsweise auftretende Erhöhungen werden mit einem Einfahren der vorderen Hubeinrichtung(en) ausgeglichen, während Vertiefungen mit einem Ausfahren der vorderen Hubeinrichtung(en) ausgeglichen werden, um den Maschinenrahmen in einer vorgegebenen Ausrichtung zum Boden zu halten.

Eine Ausführungsform der Erfindung sieht vor, die Stellung der vorderen Hubeinrichtung(en) zu überwachen, um mit zeitlicher Verzögerung einen Eingriff in die Regelung der hinteren Hubeinrichtung(en) vornehmen zu können. Ein Eingriff in die Regelung der hinteren Hubeinrichtung(en) kann in Abhängigkeit von einer mit der Stellung der vordere(n) Hubeinrichtung(en) korrelierenden Größe vorgenommen werden.

Eine alternative Ausführungsform der Erfindung sieht nicht die Überwachung der Stellung der vorderen Hubeinrichtung(en), sondern des Abstandes zwischen Maschinenrahmen und dem Boden vor. Dabei wird davon ausgegangen, dass der Maschinenrahmen aufgrund der Regelung parallel zu der idealen, von Unebenheiten freien Oberfläche des Bodens ausgerichtet ist. Bei dieser Ausführungsform, die von eigenständiger erfinderischer Bedeutung ist, wird der Abstand zwischen einem beliebigen Referenzpunkt auf dem Maschinenrahmen und der Bodenoberfläche mit einem oder mehreren geeigneten Messwertaufnehmern überwacht. Der Referenzpunkt kann am Maschinenrahmen in Arbeitsrichtung vor dem hinteren Laufwerk oder den hinteren Laufwerken liegen, insbesondere vor dem vorderen Laufwerk oder den vorderen Laufwerken. Ein Eingriff in die Regelung der hinteren Hubeinrichtung(en) wird dann in Abhängigkeit von einer mit dem Abstand korrelierenden Größe vorgenommen, die mit einem oder mehreren geeigneten Messwertaufnehmern erfasst werden kann

Zum Erfassen des Abstandes zwischen dem Referenzpunkt auf dem Maschinenrahmen und dem Boden kann eine taktile oder eine berührungslose Abstands-Erfassungseinrichtung vorgesehen sein.

Wenn die Hubstellung der vorderen Hubeinrichtung überwacht wird, stellt das vordere Laufwerk mit der Hubeinrichtung eine taktile Abstands-Erfassungseinrichtung dar, wobei das Laufwerk den Boden abtastet. Daher sind zusätzliche Komponenten zur Erfassung des Abstandes nicht erforderlich. Darüber hinaus kann mit dem vorderen Laufwerk als Tastelement einer Abtasteinrichtung die erforderliche Korrekturbewegung des hinteren Laufwerks, das die gleiche Auflagefläche wie das vordere Laufwerk aufweisen sollte, optimal ermittelt werden.

Die erfindungsgemäße Baumaschine sieht vorzugsweise vor, dass bei auftretenden Unregelmäßigkeiten der Geländeoberfläche die Bewegung der vorderen Hubeinrichtung bzw. des vorderen Laufwerks der Bewegung der hinteren Hubeinrichtung bzw. des hinteren Laufwerks überlagert wird. Wenn das vordere Laufwerk beispielweise eine Geländeerhöhung überfährt, zeichnet sich deren Profil in der Auf- und Abwärtsbewegung des Laufwerks bzw. der Bewegung der Hubeinrichtung ab. Das gleiche gilt für das Durchfahren einer Vertiefung. Da das hinter Laufwerk dem vorderen Laufwerk folgt, muss die Stellung des hinteren Laufwerks um den gleichen Betrag korrigiert werden, wie das vordere Laufwerk angehoben bzw. abgesenkt worden ist, um die Erhöhung bzw. Vertiefung auszugleichen. Folglich wird die Arbeitseinrichtung der Baumaschine, insbesondere die Betonmulde oder Fräswalze, während des Überfahrens der Erhöhung bzw. dem Durchfahren der Vertiefung mit dem hinteren Laufwerk auf die richtige Höhe in Bezug auf die Geländeoberfläche eingestellt, so dass die Betonmulde oder Fräswalze der Unregelmäßigkeit nicht folgt und unabhängig von einer lokalen Unregelmäßigkeit der Geländeoberfläche auf der gewünschten Höhe gehalten wird.

Die zeitliche Verzögerung, mit der ein Eingriff in die Regelung der hinteren Hubeinrichtung(en) vorgenommen wird, ist von der Vorschubgeschwindigkeit der Baumaschine abhängig. Für die erfindungsgemäße Steuerung oder Regelung kann die Vorschubgeschwindigkeit der Baumaschine bestimmt oder eine Wegstreckenmessung vorgenommen werden. Es kann der Zeitpunkt bestimmt werden, zu dem das hintere Laufwerk die Stelle im Gelände erreicht, bei der das vordere Laufwerk in Bezug auf den Maschinenrahmen angehoben bzw. abgesenkt worden ist, wobei sich dieser Zeitpunkt wieder aus der Vorschubgeschwindigkeit und dem Abstand zwischen dem vorderen und hinteren Laufwerk in Längsrichtung des Maschinenrahmens ergibt.

Bei einer bevorzugten Ausführungsform ist eine Wegstrecken-Messeinrichtung zum Messen der von der Baumaschine zurückgelegten Wegstrecke vorgesehen, wobei die Steuer- oder Regeleinheit derart konfiguriert ist, dass die Korrektur der Regelung der hinteren Hubeinrichtung oder der hinteren Hubeinrichtungen vorgenommen wird, wenn die Baumaschine eine vorgegebene Wegstrecke zurückgelegt hat. Diese Wegstrecke kann dem Abstand zwischen dem vorderen und hinteren Laufwerk entsprechen.

Für die erfindungsgemäße Steuerung oder Regelung, ist es unerheblich, wie die Regelung der vorderen Hubeinrichtung(en) zur Einstellung des Maschinenrahmens in vorzugsweiser paralleler Ausrichtung zur Geländeoberfläche erfolgt. Zur Regelung der vorderen Hubeinrichtung(en) ist vorzugsweise eine Einrichtung zum Bestimmen der Ausrichtung des Maschinenrahmens in Bezug auf die Oberfläche des Bodens vorgesehen, die eine den Abstand zu der Bodenoberfläche messende Abstandsmesseinrichtung und/oder eine die Neigung gegenüber der Horizontalen messende Messeinrichtung aufweisen kann. Als Messeinrichtung kommen hier alle aus dem Stand der Technik bekannten Einrichtungen in Frage, einschließlich, aber nicht beschränkt auf Ultraschall-Sensoren, Laser-Scanner, elektronische Neigungssensoren etc.

Wenn die Neigung gegenüber der Horizontalen gemessen wird, ist es erforderlich, dass die Geländeneigung bekannt ist, um den Maschinenrahmen parallel zu der Geländeoberfläche ausrichten zu können. Diese Daten können mit verschiedenen Systemen bereitgestellt werden. Beispielsweise kann die Geländeneigung aus den Höheninformationen einer GNSS-basierten Einrichtung ermittelt werden.

Die vorderen und hinteren Hubeinrichtungen sind vorzugsweise hydraulische Hubsäulen, die den Maschinenrahmen und die Laufwerke verbinden, wobei die Längsachsen der Hubsäulen vorzugsweise im rechten Winkel zu der Längsachse des Maschinenrahmens angeordnet sind.

Wenn die erfindungsgemäße Baumaschine ein Gleitschalungsfertiger mit einer Vorrichtung zum Formen von fließfähigem Material ist, sollte der Ausgang der Vorrichtung zum Formen von fließfähigem Material in Längsrichtung des Gleitschalungsfertigers auf der Höhe des hinteren Laufwerks oder der hinteren Laufwerke angeordnet sein, so dass beim Anheben und Absenken des vorderen Teils des Maschinenrahmens zur Einstellung einer zur Geländeoberfläche parallelen Ausrichtung dort die Betonmulde ihre Höhe in Bezug auf die Geländeoberfläche beibehält.

Bei einem Gleitschalungsfertiger mit zwei hinteren Laufwerken kann die Betonmulde neben einem der beiden Laufwerke an einer Seite des Maschinenrahmens angeordnet sein. Das in Arbeitsrichtung hintere Ende der Betonmulde sollte vorzugsweise in Längsrichtung des Maschinenrahmens auf der Höhe der Längsachse der Hubeinrichtung oder dem Schwerpunkt des zugehörigen auf dem Boden aufstehenden Laufwerkes liegen, wobei die Längsachse der Hubeinrichtung vorzugsweise quer zur Längsachse des Maschinenrahmens und durch den Schwerpunkt des Laufwerks verläuft.

Wenn die Baumaschine eine Straßenfräsmaschine mit einer Fräswalze ist, sollte die Fräswalze in Längsrichtung der Straßenfräsmaschine auf der Höhe des hinteren Laufwerks oder den hinteren Laufwerken angeordnet sein. Dies ist bei den bekannten Kleinfräsen der Fall, bei denen die Fräswalze zwischen den beiden hinteren Laufwerken angeordnet ist. Aber auch bei den bekannten Großfräsen kann die Erfindung wirkungsvoll zum Einsatz kommen. Großfräsen sind dadurch gekennzeichnet, dass die Fräswalze im Wesentlichen mittig zwischen den Laufwerken der Vorderachse und den Laufwerken der Hinterachse angeordnet ist. In diesem Falle bedarf es einer Umrechnung der Werte entsprechend den Hebelverhältnissen zwischen der Achse der Fräswalze und der jeweiligen Hubeinrichtung.

Im Folgenden wird ein Ausführungsbeispiel der Erfindung unter Bezugnahme auf die Zeichnungen im Einzelnen erläutert.

Es zeigen:
- Fig. 1: Einen Gleitschalungsfertiger in der Seitenansicht ohne die Fördereinrichtung,
- Fig. 2: eine stark vereinfachte schematische Darstellung eines Gleitschalungsfertigers in der Seitenansicht vor dem Überfahren einer Geländeerhöhung mit den vorderen Laufwerken,
- Fig. 3: den Gleitschalungsfertiger beim Überfahren der Geländeerhöhung mit den vorderen Laufwerken,
- Fig. 4: den Gleitschalungsfertiger nach dem Überfahren der Geländeerhöhung mit den vorderen und vor dem Überfahren der Geländeerhöhung mit den hinteren Laufwerken,
- Fig. 5: den Gleitschalungsfertiger beim Überfahren der Geländeerhöhung mit den hinteren Laufwerken,
- Fig. 6: den Gleitschalungsfertiger nach dem Überfahren der Geländeerhöhung mit den hinteren Laufwerken,
- Fig. 7: eine Straßenfräsmaschine in stark vereinfachter schematischer Darstellung,
- Fig. 8A: die Bewegung einer Arbeitseinrichtung einer Baumaschine ohne den Korrektureingriff in die Regelung der hinteren Hubeinrichtung, wobei der Boden eine ebene Oberfläche hat,
- Fig. 8B: die Bewegung einer Arbeitseinrichtung einer Baumaschine ohne den erfindungsgemäßen Korrektureingriff in die Regelung der hinteren Hubeinrichtung, wobei der Boden eine Vertiefung hat,
- Fig. 8C: die Bewegung einer Arbeitseinrichtung einer Baumaschine mit dem erfindungsgemäßen Korrektureingriff in die Regelung der hinteren Hubeinrichtung, wobei der Boden eine Vertiefung hat.

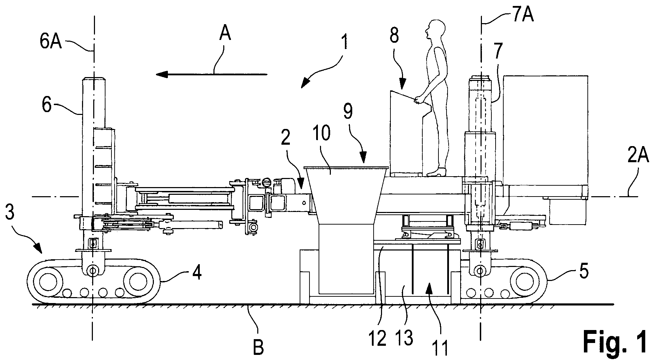

Die Figuren 1A und 1B zeigen einen Gleitschalungsfertiger, der in der europäischen Patentanmeldung EP 1 103 659 A2 im Einzelnen beschrieben ist. Da der Gleitschalungsfertiger als solcher zum Stand der Technik gehört, werden hier nur die für die Erfindung wesentlichen Komponenten der Baumaschine beschrieben.

Der Gleitschalungsfertiger 1 weist einen Maschinenrahmen 2 auf, der von einem Fahrwerk 3 getragen wird. Das Fahrwerk 3 weist zwei in Fahrt- oder Arbeitsrichtung A vordere Kettenlaufwerke 4 und zwei hintere Kettenlaufwerke 5 auf. Die vorderen und hinteren Laufwerke 4, 5 sind jeweils an vorderen bzw. hinteren Hubsäulen 6, 7 befestigt, die an dem Maschinenrahmen 2 angebracht sind, so dass der Maschinenrahmen 2 in der Höhe gegenüber dem Boden B verstellbar ist bzw. Maschinenrahmen und Laufwerke relativ zueinander bewegbar sind. Die Längsachsen 6A, 7A der Hubsäulen 6, 7 verlaufen in einem rechten Winkel zu der Längsachse 2A des Maschinenrahmens 2.

Auf dem Maschinerahmen 2 befindet sich der Fahrstand 8 des Gleitschalungsfertigers. An dem Maschinenrahmen 2 ist eine Vorrichtung 9 zum Formen von fließfähigem Material, insbesondere Beton, befestigt, die nachfolgend als Betonmulde bezeichnet wird. Die Betonmulde 9 verfügt über eine Schütte 10 für die Zufuhr von Beton, die oberhalb einer Form 11 angeordnet ist. Die an der Unterseite offene Form 11 wird an der Oberseite von einer Deckplatte 12 und den Seiten von seitlichen Platten 13 begrenzt. Der Beton tritt an der Rückseite der Form 11 aus, wobei das rückwärtige Ende der Form 11 in Längsrichtung des Gleitschalungsfertigers auf der Höhe der Längsachsen 7A der hinteren Hubsäulen 7 liegt. Die Seitenplatten 13 sind höhenverstellbar, so dass Beton beim Anheben- und Absenken des Maschinenrahmens 2 nicht seitlich austreten kann. Die Höhe der Betonmulde 9 in Bezug auf den Boden B bestimmt die Höhe des zu errichtenden Baukörpers, beispielsweise einer Leitwand.

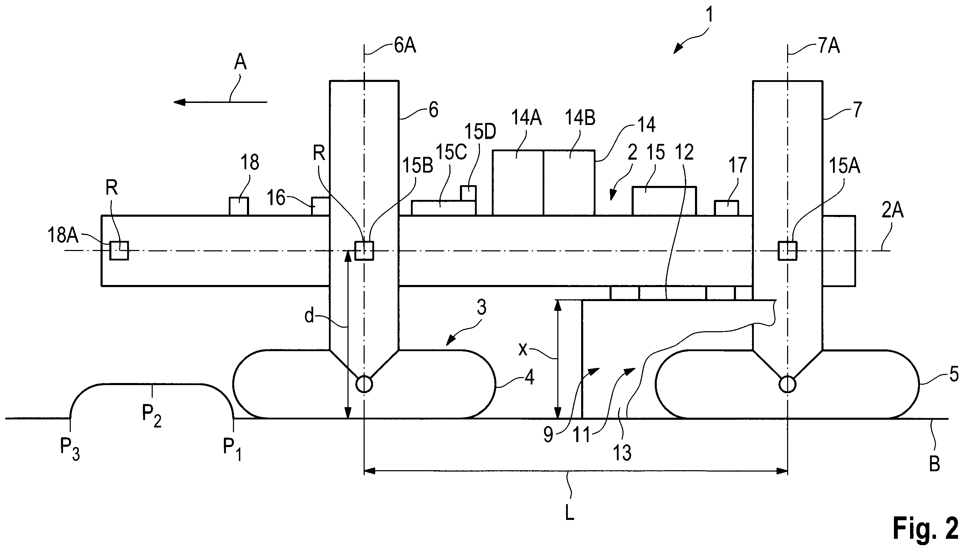

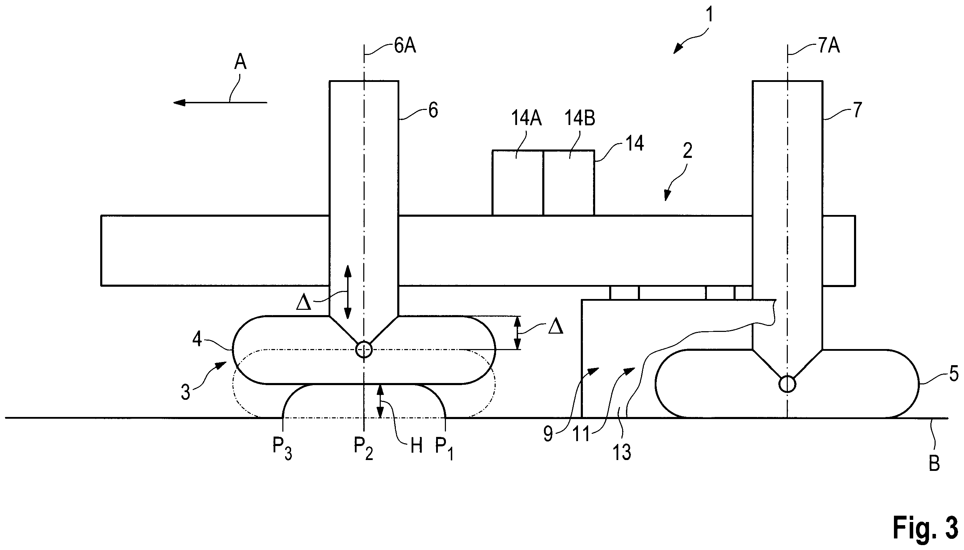

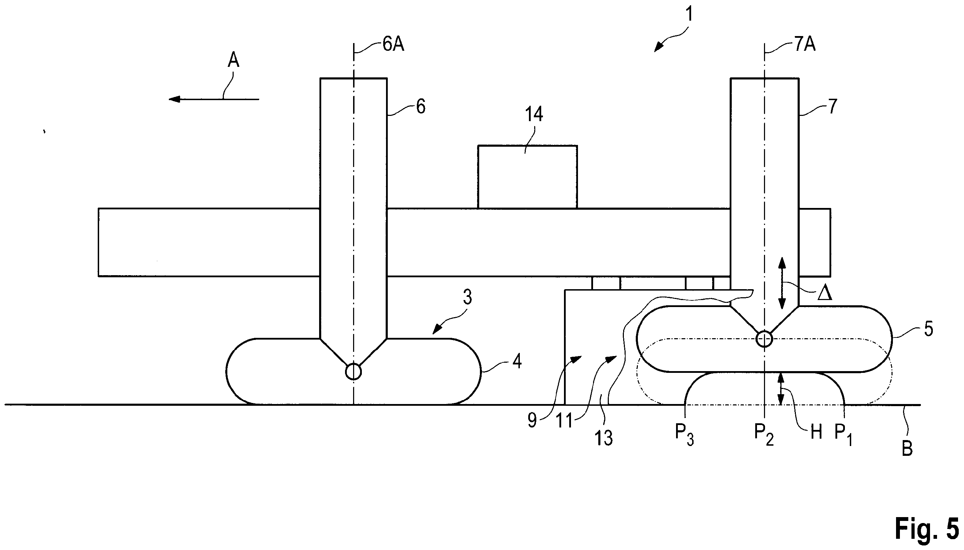

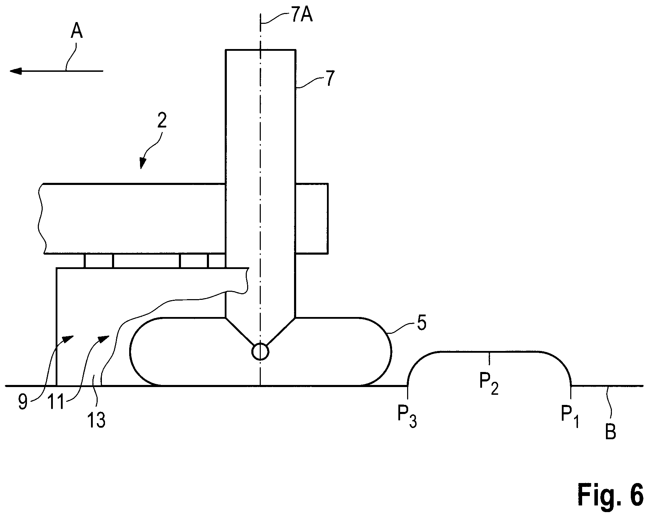

Nachfolgend wird ein erfindungsgemäßer Gleitschalungsfertiger 1 als Beispiel für eine Baumaschine unter Bezugnahme auf die Figuren 2 bis 6 beschrieben, in denen die Größe der einzelnen Teile der besseren Übersichtlichkeit halber aber nicht maßstabsgerecht dargestellt ist. Der Gleitschalungsfertiger weist zwei nur andeutungsweise dargestellte vordere und hintere Laufwerke 4, 5 auf, an denen zwei vordere und hintere Hubsäulen 6, 7 befestigt sind, an denen die vorderen und hinteren Laufwerke 4, 5 angebracht sind, die auf dem Boden B aufstehen. Die Betonmulde 9 befindet sich neben dem hinteren linken Laufwerk 5, wobei das rückwärtige Ende der Betonmulde 9 in Längsrichtung des Maschinenrahmens 2 auf der Höhe der Längsachse 7A der hinteren Hubsäule 7 bzw. dem Schwerpunkt der Aufstandsfläche des Laufwerks liegt.

Die Höhe der Deckplatte 12 der Betonmulde 9 über der Geländeoberfläche und somit die Höhe des zu errichtenden Baukörpers wird von der Stellung der Hubsäulen 6, 7 bestimmt. Zur Errichtung des Baukörpers werden die Hubsäulen 6, 7 derart eingestellt, dass sich die Deckplatte 12 auf der richtigen Höhe über der Bodenoberfläche befindet. Diese Stellung der Hubsäulen 6, 7 wird nachfolgend als Ausgangsstellung bezeichnet. Zur Ansteuerung der Hubsäulen weist der Gleitschalungsfertiger eine zentrale Steuer- oder Regeleinheit 14 auf, die in den Figuren nur andeutungsweise dargestellt ist.

Die Steuer- oder Regeleinheit 14 weist einen ersten Regelkreis 14A auf, mit dem die Hubstellung der hinteren Hubsäulen 7 derart geregelt wird, dass der Abstand x der Deckplatte 12 der Betonmulde zum Boden konstant bleibt und einer vorgegebenen Höhe des Baukörpers entspricht. Mit dieser Regelung folgt die Oberkante der Betonmulde während des Vorschubs der Baumaschine dem Boden. Der Abstand x der Deckplatte 12 der Betonmulde zum Boden wird mit einem Abstandsensor 15A, beispielsweise ein Ultraschall-Sensor, gemessen, der in Längsrichtung auf der Höhe der Achse 7A der hinteren Hubsäule 7 liegen kann. Nachfolgend wird eine Korrektur dieser Regelung beschrieben.

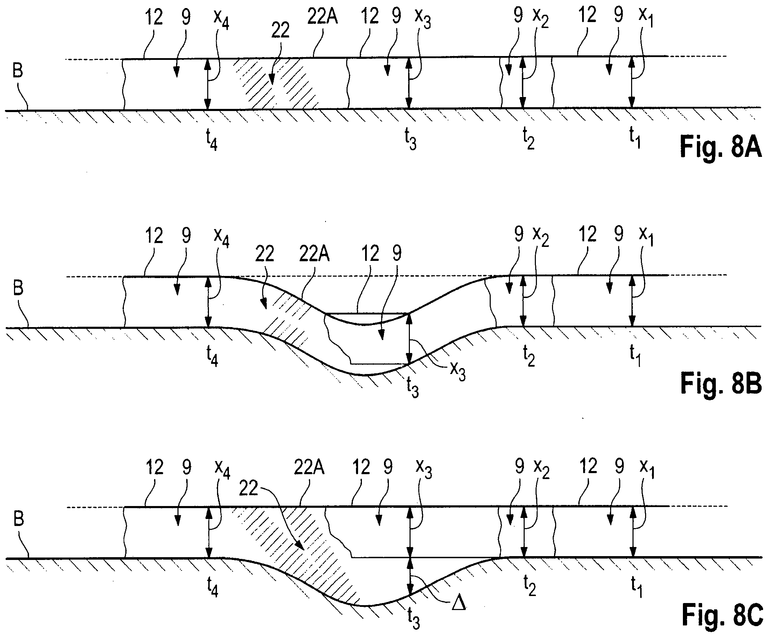

Fig. 8A zeigt in stark vereinfachter schematischer Darstellung und bei überzeichneten Größenverhältnissen die Bewegung der Betonmulde 9 für den Fall eines ebenen Bodens. Der erste Regelkreis 14A stellt mit der Regelung der hinteren Hubsäulen 7 sicher, dass der Abstand x₁, x₂, x₃ der Deckplatte 12 der Betonmulde 9 zum Boden zu den Zeitpunkten t₁, t₂ t₃ konstant ist (x = x₁ = x₂ = x₃). Dieser Fall ist aber unkritisch. Die Oberkante 22A des nur andeutungsweise dargestellten Baukörpers 22, die der Oberkante der Betonmulde 9 entspricht, liegt beim Vorschub der Maschine immer auf gleicher Höhe.

Fig. 8B zeigt die Bewegung der Betonmulde 9 für den Fall eines nicht ebenen Bodens, der eine Vertiefung aufweist. Es zeigt sich, dass der erste Regelkreis 14A wieder den Abstand x₁, x₂, x₃ der Deckplatte 12 der Betonmulde 9 zum Boden zu den Zeitpunkten t₁, t₂ t₃ konstant hält (x = x₁ = x₂ = x₃). Beim Durchfahren der Vertiefung folgt die Oberkante der Betonmulde dem Verlauf des Geländes. Folglich liegt die Oberkante 22A des Baukörpers 22 in Längsrichtung nicht mehr auf der gleichen Höhe. Die Oberkante des Baukörpers sollte aber parallel zu der als eben angenommenen Oberfläche des Bodens B verlaufen.

Die Steuer- oder Regeleinheit 14 weist einen zweiten Regelkreis 14B auf. Während des Vorschubs des Gleitschalungsfertigers regelt der zweite Regelkreis 14B die vorderen Hubsäulen 6 derart, dass der Maschinenrahmen 2 mit der Betonmulde 9 in paralleler Ausrichtung zu der als eben angenommenen Oberfläche des Bodens B verbleibt. Wenn die vorderen Laufwerke 6 beispielsweise eine Geländeerhöhung überfahren, werden die vorderen Hubsäulen aus der Ausgangsstellung um den entsprechenden Weg eingefahren, so dass die vorderen Laufwerke angehoben werden und der Maschinerahmen in paralleler Ausrichtung zur Bodenoberfläche gehalten wird. Beim Durchfahren einer Geländevertiefung werden die vorderen Laufwerke aus der Ausgangsstellung um den entsprechenden Weg ausgefahren. Aufbau und Funktion einer derartigen Steuereinheit sind in der EP 2 104 768 B1 im Einzelnen beschrieben.

Die Ausrichtung des Maschinerahmens 2 in Bezug auf die Geländeoberfläche wird mit einer in den Figuren nur andeutungsweise dargestellten Einrichtung 15 erfasst, die unterschiedlich ausgebildet sein kann.

Die Einrichtung 15 zur Bestimmung der Ausrichtung des Maschinenrahmens kann beispielsweise eine Einrichtung zum Messen des Abstandes des Maschinerahmens zu der Geländeoberfläche aufweisen, die den hinteren Abstandssensor 15A und einen vorderen Abstandssensor 15B, beispielsweise Ultraschallsensor, aufweisen kann. Aus der Differenz der mit den Abstandssensoren 15A und 15B gemessenen Abstände zum Boden kann die Ausrichtung des Maschinerahmens 2 bestimmt werden. Wenn die gemessenen Abstandswerte gleich sind, wird angenommen, dass sich der Maschinerahmen in paralleler Ausrichtung zu der Geländeoberfläche befindet. Eine derartige Bestimmung der Ausrichtung des Maschinenrahmens setzt aber voraus, dass der Abstand zu der als eben angenommenen Bodenoberfläche gemessen wird, d. h. nicht der Abstand im Bereich einer Vertiefung gemessen wird.

Eine alternative Ausführungsform der Einrichtung 15 sieht eine Einrichtung zum Messen der Neigung des Maschinerahmens 2 gegenüber der Horizontalen mit einem Neigungssensor 15C vor. Diese Einrichtung kann die Daten einer GNSS-basierten Einrichtung 15D oder eines anderen Systems empfangen, mit dem Daten bereitgestellt werden können, insbesondere Höheninformationen, aus denen sich die Neigung des Geländes berechnen läßt. Wenn die Neigung des Geländes bekannt ist, wird die Differenz zwischen der mit dem Neigungssensor 15C gemessenen Neigung des Maschinenrahmens 2 gegenüber der Horizontalen und der Neigung der Geländeoberfläche, d. h. die Neigung des Maschinenrahmens in Bezug auf die Geländeoberfläche, berechnet.

Die Figuren 2 bis 4 zeigen die Hubbewegung der vorderen Laufwerke 4 beim Überfahren einer Unebenheit. Die Steuereinheit 14 steuert die Hubsäulen 6 der vorderen Laufwerke 4 derart an, dass sie beim Überfahren der Erhöhung entsprechend eingefahren werden. Wenn die Aufstandsfläche des vorderen Laufwerks den Punkt P₁ erreicht, wird die vordere Hubsäule 6 so angesteuert, dass das vordere Laufwerk 4 aus der Ausgangsstellung eingefahren wird. An dem Scheitelpunkt P₂ der Erhöhung ist die Hubsäule 6 bzw. das Laufwerk 4 aus der Ausgangsstellung um den Weg Δ eingefahren, der der Höhe H der Erhöhung entspricht. Ist der Punkt P₃ passiert, befindet sich die Hubsäule 6 bzw. das Laufwerk 4 wieder in der Ausgangsstellung. Folglich bleibt der Maschinenrahmen 2 in paralleler Ausrichtung zur Geländeoberfläche.

Die erfindungsgemäße Steuerung oder Regelung sieht eine Korrektur der Regelung der hinteren Hubsäulen 7 mit dem ersten Regelkreis 14A in Abhängigkeit von der Regelung der vorderen Hubsäulen 6 mit dem zweiten Regelkreis 14B vor, wobei die Korrektur mit einer vorgegebenen zeitlichen Verzögerung erfolgt, die der Zurücklegung einer vorgegebene Wegstrecke L entspricht.

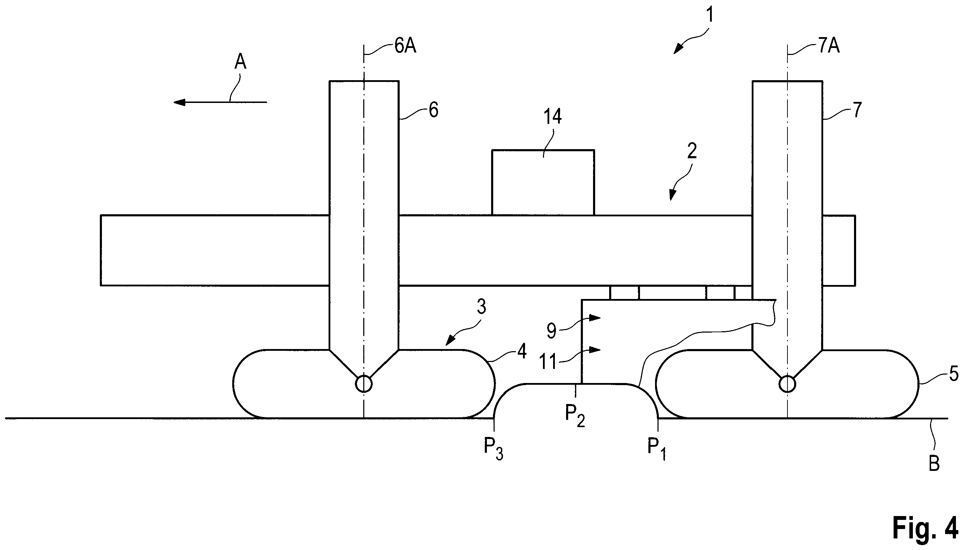

Die Figuren 4 bis 6 zeigen, dass der Hubbewegung der hinteren Hubsäule 7 bzw. des hinteren Laufwerks 5 die Bewegung der vorderen Hubsäule 6 bzw. des vorderen Laufwerks 4 überlagert wird. Die Steuer- oder Regeleinheit 14 steuert die Hubsäule 7 des hinteren Laufwerks 5 derart an, dass das hintere Laufwerk 5 zusätzlich zu der von dem ersten Regelkreis vorgegebene Hubbewegung die gleiche Hubbewegung wie das vordere Laufwerk 4 ausführt, die dem Profil der Erhöhung entspricht. Die das Profil der Geländeerhöhung beschreibenden Daten erhält die Steuer- oder Regeleinheit 14 beim Überfahren der Erhöhung mit dem vorderen Laufwerk 4.

Der Gleitschalungsfertiger weist eine erste Wegstrecken-Messeinrichtung 16 zum Messen der Hubstellung der vorderen Hubsäulen 6 und eine zweite Wegstrecken-Messeinrichtung 17 zum Messen der von der Baumaschine zurückgelegten Wegstrecke auf. Die erste Wegstrecken-Messeinrichtung 16 misst den Weg, um den die vorderen Hubsäulen 6 eingefahren werden, so dass der Maschinenrahmen in der richtigen Position verbleibt (Figuren 2 bis 4). Das Ausgangssignal der ersten Wegstrecken-Messeinrichtung 16 ist eine Größe, die mit dem Abstand d zwischen einem Referenzpunkt R am Maschinenrahmen 2 und dem Boden korreliert, wobei der Referenzpunkt R auf der Achse 6A der vorderen Hubsäule 6 liegen kann. Die Messdaten der ersten Wegstrecken-Messeinrichtung 16 beschreiben das Profil der Erhöhung, die mit zeitlicher Verzögerung von den hinteren Laufwerken 5 überfahren wird (Figuren 4 bis 6). Die zeitliche Verzögerung ergibt sich aus der Vorschubgeschwindigkeit des Gleitschalungsfertigers und dem Abstand L zwischen dem vorderen und hinteren Laufwerk 4, 5. Die zweite Wegstrecken-Messeinrichtung 17 misst den nach dem Überfahren der Erhöhung mit den vorderen Laufwerken 4 zurückgelegten Weg. Wenn die gemessene zurückgelegte Wegstrecke dem Abstand L zwischen den vorderen und hinteren Laufwerken 4, 5 entspricht, steuert die Steuer- oder Regeleinheit 14 die Hubsäulen 7 der hinteren Laufwerke 5 derart an, dass die Hubbewegung der vorderen Hubsäulen 6 bzw. Laufwerke 4 der Hubbewegung der hinteren Hubsäulen 7 bzw. Laufwerke 5 überlagert werden. Aus den Figuren 4 bis 6 ist ersichtlich, dass die Betonmulde 9 beim Überfahren der Erhöhung mit den hinteren Laufwerken 5 auf die richtige Höhe in Bezug auf den Boden B eingestellt wird. Beim Durchfahren einer Vertiefung sind die Bewegungen der Hubsäulen bzw. Laufwerke umgekehrt. Unebenheiten im Gelände führen also nicht zu unterschiedlichen Bauhöhen des Baukörpers (Figuren 8A bis 8C).

Anstelle einer die Hubstellung der vorderen Hubsäulen erfassenden Wegstrecken-Messeinrichtung 16 kann auch eine Abstandsmesseinrichtung 18 vorgesehen sein, die den Abstand d zwischen einem Referenzpunkt R am Maschinenrahmen 2 und dem Boden B misst. Diese Abstandsmesseinrichtung 18 kann einen Abstandssensor 18A aufweisen, der vorzugsweise vor dem vorderen Laufwerk 4 angeordnet ist. Der Abstandssensor 18A kann aber auch auf der Längsachse 6A der vorderen Hubsäule 6 angeordnet sein, so dass die Abstandsmessung auch mit dem Abstandssensor 15B vorgenommen werden kann.

Fig. 8C zeigt die zusätzliche Hubbewegung Δ der hinteren Hubsäule 7 bzw. des hinteren Laufwerks 5 beim Durchfahren einer Vertiefung, die von dem vorderen Laufwerk 4 bereits durchfahren worden ist. Im Vergleich zu Fig. 8B zeigt sich, dass die Korrektur der Regelung des ersten Regelkreises 14A in Abhängigkeit von dem zweiten Regelkreis 14B dazu führt, dass die Oberkante 22A des Baukörpers 22 in Längsrichtung auch beim Durchfahren der Vertiefung auf gleicher Höhe verbleibt. Die hintere Hubsäule 7 wird um denjenigen Betrag Δ ausgefahren, um den die vordere Hubsäule 6 zuvor ausgefahren worden ist.

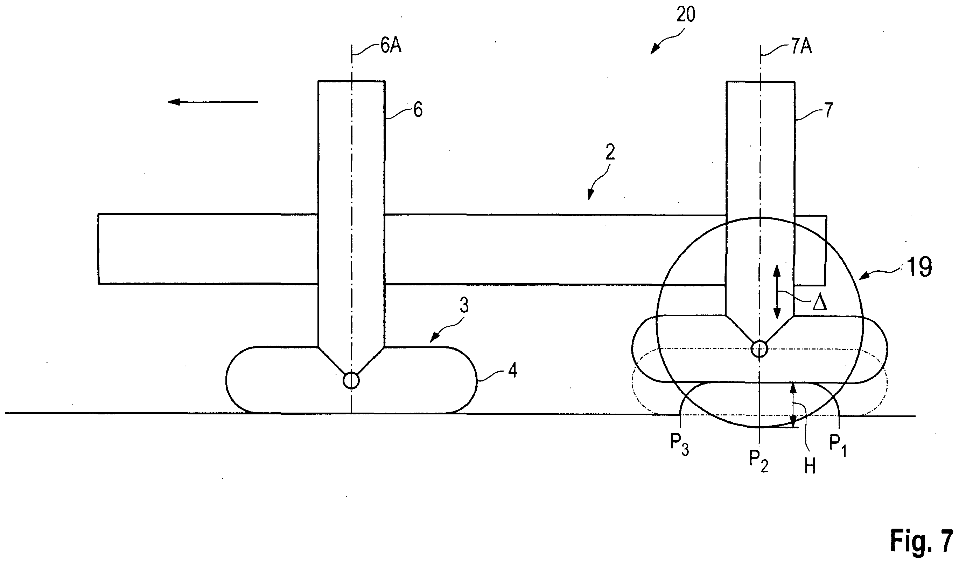

Bei einer Straßenfräsmaschine ergeben sich die gleichen Vorteile wie bei einem Gleitschalungsfertiger. Der einzige Unterschied liegt darin, dass die Baumaschine anstelle einer Betonmulde eine Fräswalze 19 aufweist. Fig. 7 zeigt eine Straßenfräsmaschine 20 in stark vereinfachter schematischer Darstellung, wobei die Größe der einzelnen Teile aber nicht maßstabsgerechte dargestellt ist. Die einander entsprechenden Teile sind mit den gleichen Bezugszeichen versehen. Die Straßenfräsmaschine 20 weist eine Fräswalze 19 auf, die an dem Maschinenrahmen 2 angeordnet ist. Die Achse der Fräswalze 19 liegt in Längsrichtung auf der Höhe der Achse der hinteren Hubsäule 7 bzw. des hinteren Laufwerks 5. Die Steuerung oder Regelung der Hubbewegung der hinteren Laufwerke 5 in Bezug auf den Maschinenrahmen 2 führt dazu, dass beim Überfahren einer abschnittsweise auftretenden Erhöhung die Frästiefe in Bezug auf die eigentliche Geländeoberfläche konstant bleibt.

## Patentansprüche

1. Selbstfahrende Baumaschine, insbesondere Gleitschalungsfertiger (1) oder Straßenfräsmaschine (20), mit
einem Fahrwerk (3), das mindestens ein auf dem Boden (B) aufstehendes in Arbeitsrichtung (A) vorderes Laufwerk (4) und mindestens ein auf dem Boden aufstehendes in Arbeitsrichtung hinteres Laufwerk (5) aufweist,
einem Maschinenrahmen (2), an dem eine Arbeitseinrichtung (9, 19) vorgesehen ist, die eine Vorrichtung (9) zum Formen von fließfähigem Material oder eine Fräswalze (19) aufweist,
wobei der Maschinenrahmen (2) von den Laufwerken (4, 5) zugeordneten Hubeinrichtungen (6, 7) getragen wird, so dass der Maschinenrahmen (2) und die Laufwerke (4, 5) relativ zueinander bewegbar und dadurch Höhe und Ausrichtung des Maschinenrahmen in Bezug auf den Boden einstellbar sind,
einer Steuer- oder Regeleinheit (14) zum Ansteuern der den vorderen und hinteren Laufwerken zugeordneten Hubeinrichtungen, wobei die Steuer- oder Regeleinheit (14) derart konfiguriert ist, dass
die Steuer- oder Regeleinheit (14) eine Regelung der hinteren Hubeinrichtung oder der hinteren Hubeinrichtungen (7) derart vorsieht, dass die Vorrichtung (9) zum Formen von fließfähigem Material oder die Fräswalze (19) in Bezug auf den Boden während des Vorschubs der Baumaschine in einer vorgegebenen Höhe verbleibt, und
die Steuer- oder Regeleinheit (14) eine Regelung der vorderen Hubeinrichtung oder der vorderen Hubeinrichtungen (6) derart vorsieht, dass der Maschinenrahmen (2) in Längsrichtung während des Vorschubs der Baumaschine in einer vorgegebenen Ausrichtung zum Boden verbleibt,
**dadurch gekennzeichnet, dass**
die Steuer- oder Regeleinheit (14) derart konfiguriert ist, dass während des Vorschubs der Baumaschine in Abhängigkeit von der Regelung der vorderen Hubeinrichtung oder der vorderen Hubeinrichtungen (6) mit einer zeitlichen Verzögerung ein Eingriff in die Regelung der hinteren Hubeinrichtung oder der hinteren Hubeinrichtungen (7) vorgenommen wird, so dass die von der hinteren Hubeinrichtung oder den hinteren Hubeinrichtungen eingestellte Höhe der Vorrichtung (9) zum Formen von fließfähigem Material oder der Fräswalze (19) in Bezug auf den Boden zur Kompensation von Bodenunebenheiten wenigstens teilweise korrigiert wird.

2. Baumaschine nach Anspruch 1, **dadurch gekennzeichnet, dass** die Steuer- oder Regeleinheit (14) derart konfiguriert ist, dass während des Vorschubs der Baumaschine mit einer zeitlichen Verzögerung ein Eingriff in die Regelung der hinteren Hubeinrichtung oder der hinteren Hubeinrichtungen (7) in Abhängigkeit von einer mit dem Abstand (d) zwischen einem Referenzpunkt (R) auf dem Maschinenrahmen (2) und dem Boden (B) korrelierenden Größe vorgenommen wird.

3. Baumaschine nach Anspruch 2, **dadurch gekennzeichnet, dass** der Referenzpunkt (R) am Maschinenrahmen (2) in Arbeitsrichtung vor dem hinteren Laufwerk oder den hinteren Laufwerken (5) liegt, insbesondere vor dem vorderen Laufwerk oder den vorderen Laufwerken (4) liegt.

4. Baumaschine nach einem Anspruch 2 oder 3, **dadurch gekennzeichnet, dass** die Steuer- oder Regeleinheit (14) derart konfiguriert ist, dass bei einer Verringerung des Abstandes (d) mit einer zeitlichen Verzögerung die hintere Hubeinrichtung (7) aus der von der Regelung der hinteren Hubeinrichtung vorgegebenen Position um einen entsprechenden Weg eingefahren wird oder die hinteren Hubeinrichtungen eingefahren werden und bei einer Vergrößerung des Abstandes (d) die hintere Hubeinrichtung um einen entsprechenden Weg ausgefahren wird oder die hinteren Hubeinrichtungen ausgefahren werden, so dass der Hubbewegung der hinteren Hubeinrichtung(en) (7) die Hubbewegung der vorderen Hubeinrichtung(en) (6) überlagert wird.

5. Baumaschine nach einem der Ansprüche 2 bis 4, **dadurch gekennzeichnet, dass** zum Erfassen einer mit dem Abstand (d) zwischen einem Referenzpunkt (R) auf dem Maschinenrahmen (2) und dem Boden (B) korrelierenden Größe eine die Hubstellung der vorderen Hubeinrichtung oder der vorderen Hubeinrichtungen (6) messende Wegstrecken-Messeinrichtung (16) vorgesehen ist.

6. Baumaschine nach einem der Ansprüche 2 bis 4, **dadurch gekennzeichnet, dass** zum Erfassen einer mit dem Abstand (d) zwischen einem Referenzpunkt (R) auf dem Maschinenrahmen (2) und dem Boden (B) korrelierenden Größe eine den Abstand (d) zwischen einem Referenzpunkt (R) auf dem Maschinenrahmen (2) und dem Boden (B) messende Abstandsmesseinrichtung (18) vorgesehen ist.

7. Baumaschine nach Anspruch 6, **dadurch gekennzeichnet, dass** die Abstandsmesseinrichtung (18) einen Abstandssensor (18A) aufweist.

8. Baumaschine nach einem der Ansprüche 1 bis 7, **dadurch gekennzeichnet, dass** die Steuer- oder Regeleinheit (14) eine Wegstrecken-Messeinrichtung (17) zum Messen der von der Baumaschine zurückgelegten Wegstrecke aufweist, und dass die Steuer- oder Regeleinheit (14) derart konfiguriert ist, dass die Korrektur der Regelung der hinteren Hubeinrichtung oder der hinteren Hubeinrichtungen (7) vorgenommen wird, wenn die Baumaschine eine vorgegebene Wegstrecke zurückgelegt hat, insbesondere eine Wegstrecke, die im Wesentlichen dem Abstand (L) zwischen den vorderen und hinteren Laufwerken (4, 5) entspricht.

9. Baumaschine nach einem der Ansprüche 1 bis 8, **dadurch gekennzeichnet, dass** die vorderen und hinteren Hubeinrichtungen hydraulische Hubsäulen (6, 7) sind, die den Maschinenrahmen (2) und die Laufwerke (4, 5) verbinden, wobei die Längsachsen (6A, 7A) der Hubsäulen (6, 7) im rechten Winkel zu der Längsachse (2A) des Maschinenrahmens (2) angeordnet sind, und dass die Steuer- oder Regeleinheit (14) derart konfiguriert ist, dass der Maschinenrahmen (2) in Längsrichtung in einer parallelen Ausrichtung in Bezug auf den Boden (B) verbleibt.

10. Baumaschine nach einem der Ansprüche 1 bis 9, **dadurch gekennzeichnet, dass** die Steuer- oder Regeleinheit (14) eine Einrichtung (15) zum Bestimmen der Ausrichtung des Maschinenrahmens (2) in Bezug auf den Boden (B) aufweist, wobei die Einrichtung (15) zum Bestimmen der Ausrichtung des Maschinenrahmens (2) in Bezug auf den Boden (B) vorzugsweise eine Messeinrichtung (15C) zur Messung der Neigung des Maschinenrahmens (2) gegenüber der Horizontalen und eine Einrichtung (15D) zur Bereitstellung von die Neigung des Geländes beschreibenden Daten aufweist, und die Einrichtung (15) zum Bestimmen der Ausrichtung des Maschinenrahmens (2) derart konfiguriert ist, dass die Differenz zwischen der Neigung des Maschinenrahmens (2) gegenüber der Horizontalen und der Neigung der Geländeoberfläche berechnet wird.

11. Baumaschine nach einem der Ansprüche 1 bis 10, **dadurch gekennzeichnet, dass** die Baumaschine ein Gleitschalungsfertiger (1) mit einer Vorrichtung (9) zum Formen von fließfähigem Material ist, wobei der Ausgang der Vorrichtung (9) zum Formen von fließfähigem Material in Längsrichtung des Gleitschalungsfertiger auf der Höhe des hinteren Laufwerks bzw. der hinteren Laufwerke (5) angeordnet ist.

12. Baumaschine nach einem der Ansprüche 1 bis 10, **dadurch gekennzeichnet, dass** die Baumaschine eine Straßenfräsmaschine (20) mit einer Fräswalze (19) ist, wobei die Fräswalze (19) in Längsrichtung der Straßenfräsmaschine auf der Höhe des hinteren Laufwerks bzw. der hinteren Laufwerke (5) angeordnet ist.

13. Verfahren zum Steuern einer selbstfahrenden Baumaschine, insbesondere eines Gleitschalungsfertigers oder einer Straßenfräsmaschine, die aufweist:
ein Fahrwerk, das mindestens ein auf dem Boden aufstehendes in Arbeitsrichtung vorderes Laufwerk und mindestens ein auf dem Boden aufstehendes in Arbeitsrichtung hinteres Laufwerk hat,
einen Maschinenrahmen, an dem eine Arbeitseinrichtung vorgesehen ist, die eine Vorrichtung zum Formen von fließfähigem Material oder eine Fräswalze hat, den Laufwerken zugeordnete Hubeinrichtungen, die den Maschinenrahmen tragen,
so dass der Maschinenrahmen und die Laufwerke relativ zueinander bewegbar und
Höhe und Ausrichtung des Maschinenrahmens in Bezug auf den Boden einstellbar sind,
wobei während des Vorschubs der Baumaschine die Hubbewegung der hinteren Hubeinrichtung oder der hinteren Hubeinrichtungen derart geregelt wird, dass die Vorrichtung zum Formen von fließfähigem Material oder die Fräswalze in Bezug auf den Boden in einer vorgegebenen Höhe verbleibt, und
während des Vorschubs der Baumaschine die Hubbewegung der vorderen Hubeinrichtung oder der vorderen Hubeinrichtungen derart geregelt wird, dass die Vorrichtung zum Formen von fließfähigem Material oder die Fräswalze in einer vorgegebenen Ausrichtung zum Boden verbleibt,
**dadurch gekennzeichnet, dass**
während des Vorschubs der Baumaschine in Abhängigkeit von der Regelung der vorderen Hubeinrichtung oder der vorderen Hubeinrichtungen mit einer zeitlichen Verzögerung ein Eingriff in die Regelung der hinteren Hubeinrichtung oder der hinteren Hubeinrichtungen vorgenommen wird, so dass die Höhe der Vorrichtung zum Formen von fließfähigem Material oder der Fräswalze in Bezug auf den Boden zur Kompensation von Bodenunebenheiten wenigstens teilweise korrigiert wird.

14. Verfahren nach Anspruch 13, **dadurch gekennzeichnet, dass** während des Vorschubs der Baumaschine mit einer zeitlichen Verzögerung ein Eingriff in die Regelung der hinteren Hubeinrichtung oder der hinteren Hubeinrichtungen in Abhängigkeit von einer mit dem Abstand (d) zwischen einem Referenzpunkt (R) auf dem Maschinenrahmen und dem Boden korrelierenden Größe vorgenommen wird.

15. Verfahren nach Anspruch 14, **dadurch gekennzeichnet, dass** der Referenzpunkt (R) am Maschinenrahmen in Arbeitsrichtung vor dem hinteren Laufwerk oder den hinteren Laufwerken liegt, insbesondere vor dem vorderen Laufwerk oder den vorderen Laufwerken liegt, wobei bei einer Verringerung des Abstandes (d) mit einer zeitlichen Verzögerung die hintere Hubeinrichtung aus der von der Regelung der hinteren Hubeinrichtung vorgegebenen Position um einen entsprechenden Weg eingefahren wird oder die hinteren Hubeinrichtungen eingefahren werden und bei einer Vergrößerung des Abstandes die hintere Hubeinrichtung um einen entsprechenden Weg ausgefahren wird oder die hinteren Hubeinrichtungen ausgefahren werden, so dass der Hubbewegung der hinteren Hubeinrichtung(en) die Hubbewegung der vorderen Hubeinrichtung(en) überlagert wird.

16. Verfahren nach Anspruch 14 oder 15, **dadurch gekennzeichnet, dass** zur Bestimmung der mit dem Abstand (d) zwischen einem Referenzpunkt (R) auf dem Maschinenrahmen und dem Boden korrelierenden Größe die Hubstellung der vorderen Hubeinrichtung oder der vorderen Hubeinrichtungen erfasst wird.

## Claims

1. Automotive construction machine, in particular slipform paver (1) or road milling machine (20), comprising
a chassis (3) which has at least one front running gear (4) standing on the ground (B) in the working direction (A) and at least one rear running gear (5) standing on the ground in the working direction,
a machine frame (2) on which a working system (9, 19) is provided which has a device (9) for forming flowable material or has a milling drum (19),
the machine frame (2) being supported by lifting systems (6, 7) associated with the running gear (4, 5), so that the machine frame (2) and the running gear (4, 5) are movable relative to one another and thereby the height and orientation of the machine frame are adjustable with respect to the ground,
a control or regulating unit (14) for controlling the lifting systems associated with the front and rear running gear, the control or regulating unit (14) being configured such that
the control or regulating unit (14) provides a control of the rear lifting system or of the rear lifting systems (7) such that the device (9) for forming flowable material or the milling drum (19) remains at a predetermined height with respect to the ground as the construction machine advances, and
the control or regulating unit (14) provides a control of the front lifting system or of the front lifting systems (6) such that machine frame (2) remains in a predetermined orientation with respect to the ground in the longitudinal direction as the construction machine advances,
**characterised in that**
the control or regulating unit (14) is configured such that as the construction machine advances, the control of the rear lifting system or of the rear lifting systems (7) is engaged with a time delay subject to the control of the front lifting system or of the front lifting systems (6), so that the height of the device (9) for forming flowable material or of the milling drum (19), adjusted by the rear lifting system or by the rear lifting systems is corrected at least in part with respect to the ground to compensate for unevennesses of the ground.

2. Construction machine according to claim 1, **characterised in that** the control or regulating unit (14) is configured such that as the construction machine advances, the control of the rear lifting system or of the rear lifting systems (7) is engaged with a time delay subject to a variable correlating with the distance (d) between a reference point (R) on the machine frame (2) and the ground (B).

3. Construction machine according to claim 2, **characterised in that** the reference point (R) on the machine frame (2) is located upstream of the rear running gear or of the plurality of rear running gear (5), in particular is located upstream of the front running gear or of the plurality of front running gear (4) in the working direction.

4. Construction machine according to either claim 2 or claim 3, **characterised in that** the control or regulating unit (14) is configured such that with a reduction in the distance (d), the rear lifting system (7) is retracted, or the rear lifting systems are retracted out of the position predetermined by the control of the rear lifting system by a corresponding distance with a time delay, and with an increase in the distance (d), the rear lifting system is extended, or the rear lifting systems are extended by a corresponding distance so that the lifting movement of the front lifting system(s) (6) is superimposed on the lifting movement of the rear lifting system(s) (7).

5. Construction machine according to any of claims 2 to 4, **characterised in that** a distance measuring means (16) that measures the lifting position of the front lifting system or of the front lifting systems (6) is provided for detecting a variable that correlates with the distance (d) between a reference point (R) on the machine frame (2) and the ground (B).

6. Construction machine according to any of claims 2 to 4, **characterised in that** a distance measuring means (18) that measures the distance (d) between a reference point (R) on the machine frame (2) and the ground (B) is provided for detecting a variable that correlates with the distance (d) between a reference point (R) on the machine frame (2) and the ground (B).

7. Construction machine according to claim 6, **characterised in that** the distance measuring means (18) comprises a distance sensor (18A).

8. Construction machine according to any of claims 1 to 7, **characterised in that** the control or regulating unit (14) has a distance measuring means (17) for measuring the distance travelled by the construction machine and **in that** the control or regulating unit (14) is configured such that the control of the rear lifting system or rear lifting systems (7) is corrected when the construction machine has travelled a predetermined distance, in particular a distance which substantially corresponds to the distance (L) between the front and rear running gear (4, 5).

9. Construction machine according to any of claims 1 to 8, **characterised in that** the front and rear lifting systems are hydraulic lifting columns (6, 7) which connect the machine frame (2) and the running gear (4, 5), the longitudinal axes (6A, 7A) of the lifting columns (6, 7) being arranged at a right angle to the longitudinal axis (2A) of the machine frame (2), and **in that** the control or regulating unit (14) is configured such that the machine frame (2) remains in a parallel orientation with respect to the ground (B) in the longitudinal direction.

10. Construction machine according to any of claims 1 to 9, **characterised in that** the control or regulating unit (14) has a means (15) for determining the orientation of the machine frame (2) with respect to the ground (B), the means (15) for determining the orientation of the machine frame (2) with respect to the ground (B) preferably having a measuring means (15C) for measuring the inclination of the machine frame (2) to the horizontal and a means (15D) for providing data describing the inclination of the ground, and the means (15) for determining the orientation of the machine frame (2) being configured such that the difference between the inclination of the machine frame (2) to the horizontal and the inclination of the ground surface is calculated.

11. Construction machine according to any of claims 1 to 10, **characterised in that** the construction machine is a slipform paver (1) with a device (9) for forming flowable material, the outlet of the device (9) for forming flowable material being arranged in the longitudinal direction of the slipform paver at the level of the rear running gear or of the plurality of rear running gear (5).

12. Construction machine according to any of claims 1 to 10, **characterised in that** the construction machine is a road milling machine (20) with a milling drum (19), the milling drum (19) being arranged in the longitudinal direction of the road milling machine at the level of the rear running gear or of the plurality of rear running gear (5).

13. Method for controlling an automotive construction machine, in particular a slipform paver or a road milling machine which comprises:
a chassis which has at least one front running gear standing on the ground in the working direction and at least one rear running gear standing on the ground in the working direction,
a machine frame on which a working system is provided which has a device for forming flowable material or a milling drum,
lifting systems which are associated with the running gear and support the machine frame so that the machine frame and the running gear are movable relative to one another and the height and orientation of the machine frame are adjustable with respect to the ground,
the lifting movement of the rear lifting system or of the rear lifting systems being controlled such that the device for forming flowable material or the milling drum remains at a predetermined height with respect to the ground as the construction machine advances, and
as the construction machine advances, the lifting movement of the front lifting system or of the front lifting systems being controlled such that the device for forming flowable material or the milling drum remains in a predetermined orientation with respect to the ground,
**characterised in that**
as the construction machine advances, the control of the rear lifting system or of the rear lifting systems is engaged with a time delay subject to the control of the front lifting system or the front lifting systems, so that the height of the device for forming flowable material or of the milling drum is corrected at least in part with respect to the ground to compensate for unevennesses of the ground.

14. Method according to claim 13, **characterised in that** as the construction machine advances, the control of the rear lifting system or of the rear lifting systems is engaged with a time delay subject to a variable correlating with the distance (d) between a reference point (R) on the machine frame (2) and the ground.

15. Method according to claim 13, **characterised in that** the reference point (R) on the machine frame is located in the working direction upstream of the rear running gear or of the plurality of rear running gear, in particular is located upstream of the front running gear or of the plurality of front running gear, with a reduction in the distance (d) the rear lifting system being retracted, or the rear lifting systems being retracted out of the position predetermined by the control of the rear lifting system by a corresponding distance with a time delay, and with an increase in the distance, the rear lifting system being extended, or the rear lifting systems being extended by a corresponding distance so that the lifting movement of the front lifting system(s) is superimposed on the lifting movement of the rear lifting system(s).

16. Method according to either claim 14 or claim 15, **characterised in that** the lifting position of the front lifting system or of the front lifting systems is detected to determine the variable correlating with the distance (d) between a reference point (R) on the machine frame and the ground.

## Revendications

1. Engin automobile de construction, en particulier finisseur à coffrage glissant (1) ou fraiseuse de route (20), avec
un châssis (3) qui présente au moins un mécanisme de roulement avant (4) dressé sur le sol (B) dans le sens de travail (A) et au moins un mécanisme de roulement arrière (5) dressé sur le sol dans le sens de travail,
un bâti de machine (2), sur lequel est prévu un dispositif de travail (9, 19) qui présente un dispositif (9) pour le formage de matériau coulant ou un rouleau de fraisage (19),
dans lequel le bâti de machine (2) est porté par des dispositifs de levage (6, 7) associés aux mécanismes de roulement (4, 5) de sorte que le bâti de machine (2) et les mécanismes de roulement (4, 5) puissent être mobiles les uns par rapport aux autres et la hauteur et l'orientation du bâti de machine soient ainsi réglables par rapport au sol,
une unité de commande ou de réglage (14) pour la commande des dispositifs de levage associés aux mécanismes de roulement avant et arrière, dans lequel l'unité de commande ou de réglage (14) est configurée de telle manière que
l'unité de commande ou de réglage (14) prévoit un réglage du dispositif de levage arrière ou des dispositifs de levage arrière (7) de telle manière que le dispositif (9) pour le formage de matériau coulant ou le rouleau de fraisage (19) reste à une hauteur prédéfinie par rapport au sol pendant l'avance de l'engin de construction, et
l'unité de commande ou de réglage (14) prévoit un réglage du dispositif de levage avant ou des dispositifs de levage avant (6) de telle manière que le bâti de machine (2) reste dans une orientation prédéfinie par rapport au sol dans le sens longitudinal pendant l'avance de l'engin de construction,
**caractérisé en ce que**
l'unité de commande ou de réglage (14) est configurée de telle manière que pendant l'avance de l'engin de construction en fonction du réglage du dispositif de levage avant ou des dispositifs de levage avant (6) avec un retard temporel, un engagement dans le réglage du dispositif de levage arrière ou des dispositifs de levage arrière (7) soit entrepris de sorte que la hauteur du dispositif (9) pour le formage de matériau coulant ou du rouleau de fraisage (19) réglée par rapport au sol par le dispositif de levage arrière ou les dispositifs de levage arrière, soit corrigée au moins en partie pour la compensation des inégalités de sol.

2. Engin de construction selon la revendication 1, **caractérisé en ce que** l'unité de commande ou de réglage (14) est configurée de telle manière que pendant l'avance de l'engin de construction avec un retard temporel, un engagement dans le réglage du dispositif de levage arrière ou des dispositifs de levage arrière (7) soit entrepris en fonction d'une grandeur en corrélation avec la distance (d) entre un point de référence (R) sur le bâti de machine (2) et le sol (B).

3. Engin de construction selon la revendication 2, **caractérisé en ce que** le point de référence (R) se trouve sur le bâti de machine (2) dans le sens de travail avant le mécanisme de roulement arrière ou les mécanismes de roulement arrière (5), en particulier avant le mécanisme de roulement avant ou les mécanismes de roulement avant (4).

4. Engin de construction selon la revendication 2 ou 3, **caractérisé en ce que** l'unité de commande ou de réglage (14) est configurée de telle manière que pour une diminution de la distance (d) avec un retard temporel, le dispositif de levage arrière (7) soit rentré depuis la position prédéfinie par le réglage du dispositif de levage arrière, d'une course correspondante ou les dispositifs de levage arrière soient rentrés et pour une augmentation de la distance (d), le dispositif de levage arrière soit sorti d'une course correspondante ou les dispositifs de levage arrière soient sortis de sorte que le mouvement de levage du/des dispositif(s) de levage avant (6) soit superposé au mouvement de levage du/des dispositif(s) de levage arrière (7).

5. Engin de construction selon l'une quelconque des revendications 2 à 4, **caractérisé en ce que** pour la détection d'une grandeur en corrélation avec la distance (d) entre un point de référence (R) sur le bâti de machine (2) et le sol (B), un dispositif de mesure de parcours (16) mesurant la position de levage du dispositif de levage avant ou des dispositifs de levage (6) avant est prévu.

6. Engin de construction selon l'une quelconque des revendications 2 à 4, **caractérisé en ce que** pour la détection d'une grandeur en corrélation avec la distance (d) entre un point de référence (R) sur le bâti de machine (2) et le sol (B), un dispositif de mesure de distance (18) mesurant la distance (d) entre un point de référence (R) sur le bâti de machine (2) et le sol (B) est prévu.

7. Engin de construction selon la revendication 6, **caractérisé en ce que** le dispositif de mesure de distance (18) présente un capteur de distance (18A).

8. Engin de construction selon l'une quelconque des revendications 1 à 7, **caractérisé en ce que** l'unité de commande ou de réglage (14) présente un dispositif de mesure de parcours (17) pour la mesure de la distance parcourue par l'engin de construction, et **en ce que** l'unité de commande ou de réglage (14) est configurée de telle manière que la correction du réglage du dispositif de levage arrière ou des dispositifs de levage arrière (7) soit entreprise lorsque l'engin de construction a parcouru une distance prédéfinie, en particulier un parcours qui correspond sensiblement à la distance (L) entre les mécanismes de roulement avant et arrière (4, 5).

9. Engin de construction selon l'une quelconque des revendications 1 à 8, **caractérisé en ce que** les dispositifs de levage avant et arrière sont des colonnes de levage hydrauliques (6, 7) qui relient le bâti de machine (2) et les mécanismes de roulement (4, 5), dans lequel les axes longitudinaux (6A, 7A) des colonnes de levage (6, 7) sont agencés à angle droit de l'axe longitudinal (2A) du bâti de machine (2), et **en ce que** l'unité de commande ou de réglage (14) est configurée de telle manière que le bâti de machine (2) reste dans le sens longitudinal dans une orientation parallèle par rapport au sol (B).

10. Engin de construction selon l'une quelconque des revendications 1 à 9, **caractérisé en ce que** l'unité de commande ou de réglage (14) présente un dispositif (15) pour la détermination de l'orientation du bâti de machine (2) par rapport au sol (B), dans lequel le dispositif (15) pour la détermination de l'orientation du bâti de machine (2) présente par rapport au sol (B), de préférence un dispositif de mesure (15C) pour la mesure de l'inclinaison du bâti de machine (2) par rapport à l'horizontale et un dispositif (15D) pour la mise à disposition de données décrivant l'inclinaison du terrain, et le dispositif (15) pour la détermination de l'orientation du bâti de machine (2) est configuré de telle manière que la différence entre l'inclinaison du bâti de machine (2) par rapport à l'horizontale et l'inclinaison de la surface de terrain soit calculée.

11. Engin de construction selon l'une quelconque des revendications 1 à 10, **caractérisé en ce que** l'engin de construction est un finisseur à coffrage glissant (1) avec un dispositif (9) pour le formage de matériau coulant, dans lequel la sortie du dispositif (9) pour le formage de matériau coulant est agencée dans le sens longitudinal du finisseur à coffrage glissant à la hauteur du mécanisme de roulement arrière ou des mécanismes de roulement arrière (5).

12. Engin de construction selon l'une quelconque des revendications 1 à 10, **caractérisé en ce que** l'engin de construction est une fraiseuse de route (20) avec un rouleau de fraisage (19), dans lequel le rouleau de fraisage (19) est agencé dans le sens longitudinal de la fraiseuse de route à la hauteur du mécanisme de roulement arrière ou des mécanismes de roulement arrière (5).

13. Procédé de commande d'un engin automobile de construction, en particulier d'un finisseur à coffrage glissant ou d'une fraiseuse de route, qui présente :
un châssis qui a au moins un mécanisme de roulement avant dressé sur le sol dans le sens de travail et au moins un mécanisme de roulement arrière dressé sur le sol dans le sens de travail,
un bâti de machine, sur lequel est prévu un dispositif de travail qui a un dispositif de formage de matériau coulant ou un rouleau de fraisage,
des dispositifs de levage associés aux mécanismes de roulement qui portent le bâti de machine de sorte que le bâti de machine et les mécanismes de roulement soient mobiles les uns par rapport aux autres et la hauteur et l'orientation du bâti de machine soient réglables par rapport au sol,
dans lequel pendant l'avance de l'engin de construction, le mouvement de levage du dispositif de levage arrière ou des dispositifs de levage arrière est réglé de telle manière que le dispositif pour le formage de matériau coulant ou le rouleau de fraisage reste à une hauteur prédéfinie par rapport au sol, et
pendant l'avance de l'engin de construction, le mouvement de levage du dispositif de levage avant ou des dispositifs de levage avant est réglé de telle manière que le dispositif pour le formage de matériau coulant ou le rouleau de fraisage reste dans une orientation prédéfinie par rapport au sol,
**caractérisé en ce que**
pendant l'avance de l'engin de construction en fonction du réglage du dispositif de levage avant ou des dispositifs de levage avant avec un retard temporel, un engagement dans le réglage du dispositif de levage arrière ou des dispositifs de levage arrière est entrepris, de sorte que la hauteur du dispositif pour le formage de matériau coulant ou du rouleau de fraisage par rapport au sol soit corrigée au moins en partie pour la compensation d'inégalités de sol.

14. Procédé selon la revendication 13, **caractérisé en ce que** pendant l'avance de l'engin de construction avec un retard temporel, un engagement dans le réglage du dispositif de levage arrière ou des dispositifs de levage arrière en fonction d'une grandeur en corrélation avec la distance (d) entre un point de référence (R) sur le bâti de machine et le sol est entrepris.

15. Procédé selon la revendication 14, **caractérisé en ce que** le point de référence (R) se trouve sur le bâti de machine dans le sens de travail avant le mécanisme de roulement arrière ou les mécanismes de roulement arrière, en particulier avant le mécanisme de roulement avant ou les mécanismes de roulement avant, dans lequel pour une réduction de la distance (d) avec un retard temporel, le dispositif de levage arrière est rentré de la position prédéfinie par la réglage du dispositif de levage arrière, d'une course correspondante ou les dispositifs de levage arrière sont rentrés et pour une augmentation de la distance, le dispositif de levage arrière est sorti d'une course correspondante ou les dispositifs de levage arrière sont sortis de sorte que le mouvement de levage du/des dispositif(s) de levage avant soit superposé au mouvement de levage du/des dispositif(s) de levage arrière.

16. Procédé selon la revendication 14 ou 15, **caractérisé en ce que** pour la détermination de la grandeur en corrélation avec la distance (d) entre un point de référence (R) sur le bâti de machine et le sol, la position de levage du dispositif de levage avant ou des dispositifs de levage avant est détectée.
